# FASCICULE DE BREVET EUROPEEN

(11) **EP 0 772 382 B1**
(45) Date de publication et mention de la délivrance du brevet: **07.10.1998**
(21) Numéro de dépôt: 95926423.5
(22) Date de dépôt: 25.07.1995
(51) Int. Cl.: A01B 63/108, A01B 63/114

(54) **DISPOSITIF DE CONTROLE D'UN OUTIL AGRICOLE DESTINE A ETRE POUSSE PAR UN TRACTEUR**
REGELUNGSVORRICHTUNG FÜR SCHLEPPERGESCHOBENES LANDWIRTSCHAFTLICHES GERÄT
DEVICE FOR CONTROLLING A TRACTOR-PUSHED AGRICULTURAL IMPLEMENT

(30) Priorité: 27.07.1994 FR 9409299
(43) Date de publication de la demande: 14.05.1997
(73) Titulaire: Defrancq, Hubert, 02190 Guignicourt (FR)
(72) Inventeur: Defrancq, Hubert, 02190 Guignicourt (FR)
(74) Mandataire: Michardière, Bernard
(86) Numéro de dépôt international: FR9500996
(87) Numéro de publication internationale: WO9603024

(56) Documents cités:
- EP-A- 0 241 747
- DE-A- 3 438 353
- FR-A- 2 649 580
- FR-A- 2 649 810
- US-A- 3 913 680

## Description

L'invention est relative à un dispositif de contrôle d'un outil agricole muni d'au moins une roue de jauge, et destiné à être poussé par un tracteur, dispositif du genre de ceux qui comprennent un système d'attelage et de relevage destiné à être monté à l'avant du tracteur pour la fixation de l'outil, ce système comportant :
- deux bras longitudinaux inférieurs dont les parties arrière comportent des moyens d' articulation agencés pour être reliés an bâti du tracteur, et dont les extrémités avant sont munies d'un moyen d'accrochage de l'outil pour constituer deux points d'accrochage bas,
- un organe d'accrochage supérieur pour relier un troisième point d'accrochage du tracteur à l'outil, ce dernier étant équipé, à sa partie arrière, de trois moyens d'accrochage conjugués de ceux du système d'attelage
- au moins un vérin de relevage et des moyens de distribution pour contrôler la montée ou la descente des bras longitudinaux; des moyens de mesure (M) du patinage du tracteur prévus pour être montés sur le tracteur;
- et des moyens de commande de ces moyens de distribution, en réponse à l'information sur le patinage du tracteur provenant de ces moyens de mesure du patinage,
   l'ensemble étant agencé pour commander une montée des bras inférieurs et une diminution de la profondeur de travail de l'outil lorsque le taux de patinage du tracteur devient supérieur à une valeur de référence déterminée.

Un dispositif de ce genre est connu d'après FR-A-2 649 810 et contribue à améliorer les conditions de travail du tracteur. Toutefois, si la diminution de profondeur en réduisant l'effort requis s'accompagne d'une réduction du patinage,il n'y a pas amélioration de la capacité de traction. Un des buts de l'invention est que la diminution de la profondeur de travail de l'outil s'accompagne d'un report sur le tracteur de la charge normalement supportée par les roues de jauge de l'outil.

Une autre cause de perte de capacité de traction est expliquée ci-après.

Les outils poussés qui travaillent dans le sol sont munis de roues de jauge notamment pour pouvoir suivre le relief en toutes conditions.

Afin d'éviter des contraintes mécaniques néfastes au fonctionnement de l'ensemble tracteur/outil, il convient, lors du travail du sol, que le système hydraulique d'attelage et de relevage agisse selon un mode flottant pour permettre un suivi du relief longitudinal et éventuellement transversal, ou que le relevage avant soit équipé de moyens permettant un pivotement de l'outil, par rapport au système de relevage, dans le sens longitudinal (pivotement autour d'un axe sensiblement parallèle aux axes des roues du tracteur) et éventuellement latéral (pivotement autour d'un axe parallèle à l'axe longitudinal du tracteur).

L'utilisation du système hydraulique de relevage en mode flottant ne permet pas de supporter l'outil pendant le travail, cet outil étant alors supporté essentiellement par la ou les roues de jauge. Il en résulte une perte de capacité de traction au niveau du tracteur et une difficulté à en maîtriser la conduite. Le réglage de l'outil est délicat.

L'utilisation d'un organe d'accrochage supérieur formé par un système de liaison coulissant, associé à un maintien en position des bras inférieurs, permet de supporter une partie du poids de l'outil et de simplifier les réglages. Cependant une part importante du poids de l'outil reste supportée par les roues de jauge. Il en résulte là aussi une perte de capacité de traction au niveau du tracteur.

Pour améliorer la capacité de traction des tracteurs, on connaît, d'après FR-A-2 512 319, un dispositif dans lequel l'organe d'accrochage supérieur comprend au moins un vérin, tandis qu'un système de capteurs d'efforts est prévu sur la ou les roues de jauge pour commander, au moyen d'une centrale électro-hydraulique, l'alimentation du vérin de liaison supérieur afin de prélever une partie du poids supporté par les roues de jauge pour la transférer sur le tracteur et améliorer sa capacité de traction.

Un inconvénient important d'un tel dispositif est d'exiger des roues de jauge munies de capteurs pour chaque outil. Il en résulte un surcoût notable à l'achat, et des contraintes de maintenance supplémentaires car les capteurs, fortement sollicités, sont situés dans des zones exposées aux agressions. De plus, il faut assurer sur l'outil, le passage de faisceaux de câbles électriques destinés à relier les capteurs à la centrale électro-hydraulique, et raccorder ces faisceaux au tracteur. Ces opérations peuvent être source d'erreurs et allongent le temps de raccordement de l'outil au tracteur. En outre, les connexions peuvent être des sources de pannes.

Un autre but de l'invention est d'améliorer la capacité de traction du tracteur sans avoir à utiliser de capteurs sur les roues de jauge, ni de faisceaux de câbles électriques de liaison entre ces capteurs et le tracteur.

On souhaite, en outre, que le dispositif de contrôle, tout en assurant un transfert de charge optimal pour améliorer la capacité de traction du tracteur de façon automatique et sans avoir recours à des capteurs sur roues de jauge, permette un suivi de relief longitudinal et éventuellement transversal.

Selon l'invention, un dispositif de contrôle d'un outil agricole muni d'au moins une roue de jauge et destiné à être poussé par un tracteur, du genre défini précédemment, est caractérisé par le fait que, d'une manière connue en elle-même, l'organe d'accrochage supérieur comprend au moins un vérin de troisième point relié à de seconds moyens de distribution de fluide propres à prendre une première position pour laquelle les variations de longueur de l'ensemble de la tige et du cylindre du vérin de troisième point sont libres, et une deuxième position pour laquelle le vérin de troisième point est bloqué et contribue à un transfert de charge de la roue de jauge au tracteur, et que ces seconds moyens de distribution sont commandés par les susdits moyens de commande de manière telle que lorsqu'une montée des bras inférieurs longitudinaux a lieu, les seconds moyens de distribution passent sur leur deuxième position, pour assurer un report d'une partie de la charge de la ou des roues de jauge de l'outil vers le tracteur, simultanément à une commande de la diminution de la profondeur de travail de l'outil.

La configuration géométrique du système d'attelage est de préférence telle, selon l'exigence des normes, que lorsqu'une montée des bras inférieurs est commandée, le vérin de troisième point est sollicité à l'allongement ; avantageusement, selon l'invention, les seconds moyens de distribution, dans leur deuxième position, assurent un blocage du liquide dans la chambre du vérin comprimée à l'allongement et donc un blocage de la longueur d'ensemble du vérin de troisième point, de sorte que la montée des bras inférieurs s'accompagne alors d'un soulèvement de la partie avant de l'outil et d'un délestage de la ou des roues de jauge avec transfert automatique de charge sur le tracteur.

Avantageusement, le vérin de troisième point est du type à double effet et chacune des chambres situées de part et d'autre du piston est reliée aux seconds moyens de distribution de fluide.

De préférence, les seconds moyens de distribution sont commandés électriquement et le montage est prévu pour que lorsque l'alimentation électrique du dispositif de contrôle est assurée, les moyens de distribution passent dans leur première position correspondant à un mode flottant, tandis qu'en cas de coupure de l'alimentation électrique, les seconds moyens de distribution passent sur la deuxième position assurant le blocage de la longueur du vérin de troisième point.

Avantageusement, les seconds moyens de distribution, dans leur première position, sont propres à assurer un gavage en liquide sous une pression relativement faible, en particulier inférieure à 20 bars, de la chambre côté tige du vérin, pour éviter le phénomène de cavitation, tandis que l'autre chambre est reliée à la bâche (réservoir de liquide à la pression atmosphérique).

Dans le cas où un seul vérin de troisième point est prévu, par exemple dans le cas où l'outil est muni d'une seule roue de jauge, les seconds moyens de distribution, commandant ce vérin de troisième point, comportent avantageusement une troisième position qui permet d'inverser la distribution du fluide par rapport à la première position et de commander une élongation du vérin, le passage des seconds moyens de distribution dans cette troisième position pouvant être commandé à l'aide d'un bouton de contact extérieur, en particulier lors des opérations d'attelage de l'outil.

Un cadre intermédiaire, notamment en forme de U renversé comme montré par FR-A-2 649 580, peut être prévu entre les points d'accrochage du système d'attelage et l'outil. Dans ce cas, le dispositif de contrôle comporte deux vérins de troisième point formant entre eux un angle dont le sommet correspond au troisième point d'accrochage sur le bâti du tracteur, et dont les extrémités correspondent à deux points d'accrochage latéraux prévus sur la partie supérieure du cadre, symétriquement par rapport au troisième point d'accrochage de l'outil situé au milieu de la partie supérieure du cadre.

Les seconds moyens de distribution, pour un système à deux vérins de troisième point à double effet, sont agencés pour assurer, dans leur première position, un pontage mettant en communication les deux chambres côté tige des deux vérins de troisième point, alors que les deux autres chambres des vérins sont reliées à la bâche.

Avantageusement, les deux bras longitudinaux inférieurs du système d'attelage sont capables de mouvements relatifs l'un par rapport à l'autre et peuvent prendre des inclinaisons différentes l'un par rapport à l'autre.

Lorsque le système d'attelage comprend un cadre intermédiaire, le dispositif de contrôle comprend, de préférence, des troisièmes moyens de distribution à deux positions, disposés sur une conduite reliée en parallèle aux deux chambres de vérins de troisième point opposées à la tige, ces troisièmes moyens de distribution assurant, dans une première position (fonctionnement normal), la liaison des chambres opposées à la tige avec le réservoir de liquide à faible pression, tandis que dans une deuxième position, commandée extérieurement, ces troisièmes moyens de distribution assurent une arrivée, dans les chambres opposées à la tige, de liquide sous même pression que celui admis dans les chambres côté tige, de sorte que par effet différentiel dû à la section de la tige, il y ait allongement des vérins de troisième point, notamment en vue de faciliter l'accrochage du troisième point haut de l'outil, après l'accrochage des deux points inférieurs.

Le cadre intermédiaire peut comporter, en partie haute médiane, deux ailes en saillie vers l'arrière munies, à leur extrémité arrière, d'un trou ou analogue pour l'accrochage d'une barre de troisième point, en particulier de longueur réglable.

Les points d'accrochage du système d'attelage, en particulier la barre de troisième point sont agencés pour assurer un raccordement automatique, des moyens indicateurs de verrouillage étant avantageusement prévus.

L'invention consiste, mises à part les dispositions exposées ci-dessus, en un certain nombre d'autres dispositions dont il sera plus explicitement question ci-après à propos d'exemples de réalisation décrits avec référence aux dessins ci-annexés, mais qui ne sont nullement limitatifs.

La figure 1, de ces dessins, est une vue schématique en perspective d'un outil agricole attelé à l'avant d'un tracteur.

La figure 2 est un schéma du dispositif de contrôle selon l'invention.

La figure 3 est une vue en élévation schématique illustrant le fonctionnement du dispositif selon l'invention.

La figure 4 est une vue schématique en perspective d'un dispositif d'attelage avec le cadre intermédiaire.

La figure 5 est une vue schématique, de face, du dispositif de la figure 4 auquel est attelé un outil.

La figure 6 est un schéma du dispositif de contrôle selon l'invention avec système d'attelage selon les figures 4 et 5.

La figure 7 est une vue de côté d'un cadre intermédiaire avec un troisième point supérieur selon l'invention.

La figure 8 est une vue arrière du cadre de la figure 7.

Les figures 9 et 10, enfin, illustrent schématiquement une barre supérieure de raccordement automatique.

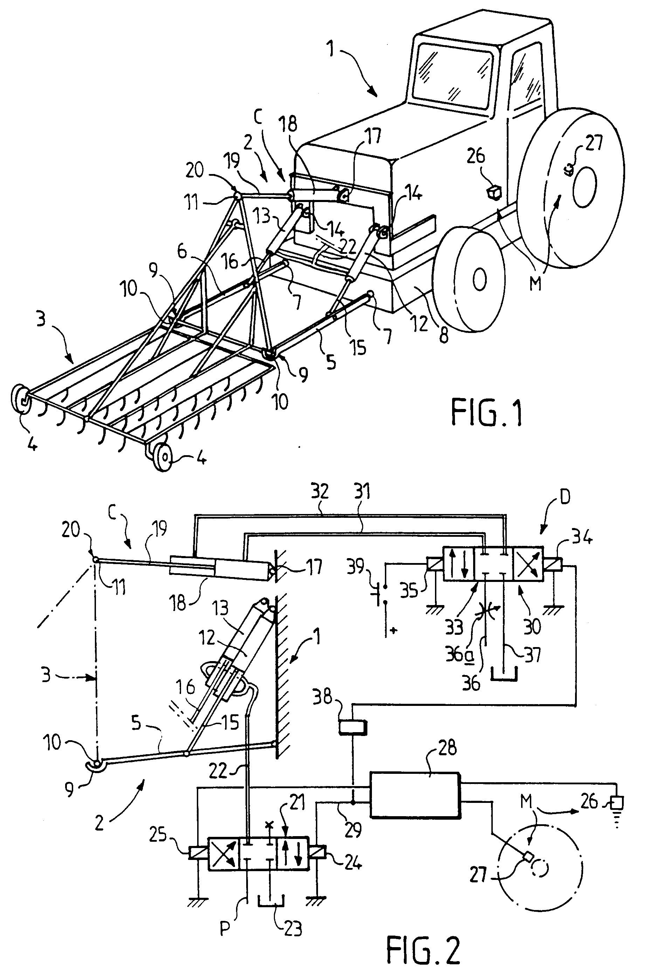

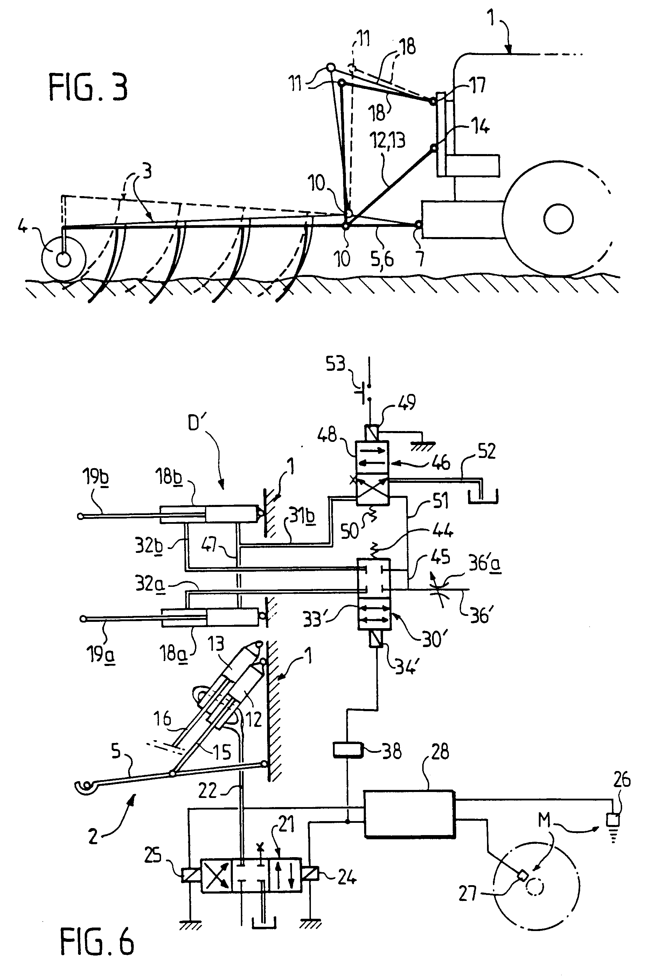

En se reportant aux dessins, notamment aux figures 1 et 3, on peut voir un tracteur 1 équipé, à l'avant, d'un système d'attelage et de relevage 2 auquel est accroché un outil 3 destiné à être poussé par le tracteur 1. L'outil 3 schématiquement représenté sur la figure 1 est un outil large, par exemple du type chisel large, et comporte, de chaque côté, à son extrémité avant, une roue de jauge 4. Dans le cas d'un outil plus étroit, par exemple dans le cas d'une charrue, une seule roue de jauge serait prévue à l'avant de l'outil. Bien entendu, le tracteur 1 est généralement équipé, à l'arrière, d'un ou plusieurs autres outils non représentés sur les dessins.

Le système d'attelage et de relevage 2 comporte deux bras longitudinaux inférieurs 5, 6 dont les parties arrière comportent des moyens d'articulation 7 sur le bâti 8 du tracteur et dont les extrémités avant sont munies de moyens d'accrochage 9 classiques, tels qu'une main d'accrochage. Ces deux moyens d'accrochage 9 constituent deux points d'accrochage bas pour l'outil 3 qui est équipé de manière classique à son extrémité arrière, de trois points d' accrochage à savoir deux points bas latéraux 10 et un point d'accrochage supérieur médian 11.

Un vérin de relevage 12, 13 est associé à chaque bras 5, 6 pour contrôler la montée ou la descente de ce bras. L'extrémité du cylindre de chaque vérin 12, 13, éloignée de la tige de piston, est articulée sur un axe transversal 14 porté par le tracteur 1. La tige 15, 16 du piston de chacun des vérins est liée par une articulation transversale au bras longitudinal associé 5, 6. En variante, chaque vérin pourrait être retourné pour assurer les mêmes fonctions.

Dans l'exemple considéré, les bras 5 et 6 sont capables d'un mouvement relatif l'un par rapport à l'autre, assurant l'oscillation autour d'un axe longitudinal virtuel, sans changement de hauteur. Dans une variante de réalisation, les bras 5 et 6 pourraient être reliés rigidement l'un à l'autre, auquel cas un seul vérin de relevage pourrait être prévu.

Le système d'attelage 2 comprend un organe d'accrochage supérieur C relié à un troisième point d'accrochage 17 du tracteur situé au-dessus et à égale distance des deux points d'accrochage bas 7. L'organe d'accrochage supérieur C est constitué, dans l'exemple de réalisation de la figure 1, par un vérin de troisième point 18. L'extrémité du cylindre du vérin 18, éloignée de la tige 19 de piston, est reliée par une articulation au point d'accrochage 17 du tracteur. La tige de piston 19 porte, à son extrémité extérieure, un moyen d'accrochage 20 pour le point d'accrochage supérieur conjugué 11 de l'outil.

Des moyens de distribution, constitués de préférence par un électrodistributeur 21 (figure 2) sont prévus pour contrôler l'admission ou l'échappement de liquide sous pression dans les vérins 12, 13 et contrôler ainsi la montée ou la descente des bras longitudinaux 5 6.

Les vérins 12, 13 sont à simple effet, mais pourraient être à double effet. Les chambres inférieures des cylindres, situées du côté de la tige, sont reliées en parallèle par une conduite de liquide 22 à un orifice du distributeur 21. La conduite 22, en forme de T pour assurer l'alimentation en parallèle, peut comprendre des tronçons flexibles. Le distributeur 21, en position neutre du tiroir, isole la conduite 22 de la source de pression P et de la bâche 23 ou réservoir de liquide qui n'est pas sous pression. La liaison en parallèle des chambres des vérins 12, 13 permet un transfert de liquide d'un vérin dans l'autre et le susdit mouvement relatif symétrique, en sens opposés, des bras 5, 6 l'un par rapport à l'autre, avec oscillation de l'outil 3 autour d'un axe longitudinal virtuel, sans changer de hauteur.

Le distributeur 21 comporte deux bobines 24, 25 d'électroaimants. Lorsque la bobine 24 est mise sous tension, le tiroir du distributeur 21 passe dans une position (case de droite) où le liquide sous pression est envoyé dans la chambre inférieure du vérin 12 ou 13, ce qui provoque la rentrée de la tige 15, 16 et la montée du bras associé 5, 6. Lorsque la bobine 25 est mise sous tension, le tiroir du distributeur 21 passe dans une position (case de gauche) où la conduite 22 est reliée à la bâche 23. Le liquide peut alors s'écouler de la chambre inférieure du vérin 12, 13 ce qui entraîne la sortie des tiges 15, 16 et la descente des bras 5, 6 sous l'effet de la charge qu'ils supportent.

Des moyens M de mesure du patinage du tracteur relativement au sol sont prévus. Ces moyens M comprennent, par exemple, un radar 26 fixé sur le bâti du tracteur, dirigé vers le sol, et propre à fournir la vitesse réelle du tracteur 1 par rapport au sol comme expliqué dans FR-A-2 649 810. Un capteur 27 est en outre associé à une roue motrice du tracteur pour compter le nombre de tours de roue par unité de temps et déterminer, à partir du périmètre de la roue, la vitesse théorique que devrait avoir le tracteur en l'absence de patinage. Les informations fournies par le radar 26 et le capteur 27 sont envoyées à des entrées d'un circuit électronique de calcul 28, comprenant par exemple un microprocesseur, propre à déterminer le taux de patinage. L'ensemble électronique de calcul 28 compare le taux de patinage calculé à une valeur de référence. Si le taux de patinage calculé devient supérieur à la valeur de référence, l'ensemble 28 fournit, sur une de ses sorties reliée à la bobine 24 par une liaison électrique 29, une tension de commande pour faire passer le tiroir du distributeur 21 dans la position qui assure l'admission de liquide sous pression dans la chambre inférieure des vérins 12, 13. Il en résulte une montée des bras 5, 6 et un soulèvement de l'outil 3. La profondeur de travail de cet outil 3 diminue ce qui provoque une diminution de la poussée à exercer par le tracteur 1 et tend à réduire le patinage.

Le dispositif de contrôle D de l'invention comprend (outre le système d'attelage, les moyens de distribution 21 et les moyens de commande 28 en fonction du patinage du tracteur) des seconds moyens de distribution de liquide 30. Le vérin de troisième point 18 est à double effet et ses deux chambres sont reliées par des canalisations respectives 31, 32 à deux orifices des seconds moyens de distribution 30. Ces moyens 30 sont constitués par un électrodistributeur 33 dont le tiroir est commandé par deux bobines électromagnétiques 34, 35 prévues à chaque extrémité du distributeur. Lorsqu'aucune des bobines 34, 35 n'est sous tension, le distributeur 33 est dans sa deuxième position, ou position neutre illustrée sur la figure 2, pour laquelle les deux canalisations 31, 32 sont fermées. Dans ces conditions, le liquide se trouvant dans les deux chambres du vérin 18 situées de part et d'autre du piston est emprisonné ; le piston du vérin 18 et la tige 19 liée à ce piston ne peuvent se déplacer puisque le liquide est confiné dans un volume clos ; la longueur d'ensemble du vérin 18 est bloquée à une valeur constante. La distance entre le point d'articulation 17 sur le tracteur et le moyen d'accrochage 20 qui reçoit le point d'accrochage supérieur de l'outil 11 est également constante.

Il est à noter que la distance entre les articulations 7 et 17 côté tracteur est inférieure à la distance entre les articulations 10 et 11 côté outil, de sorte que la montée des bras 5, 6 et du point d'accrochage supérieur 11 sollicite le vérin 18 à l'allongement.

Lorsque la bobine 34 est mise sous tension, le tiroir du distributeur 33 se déplace vers la gauche de la figure 2, pour prendre sa première position, de sorte que la canalisation 32, qui débouche dans la chambre du vérin 18 située du côté tige, se trouve reliée à une canalisation 36 propre à fournir du liquide sous une pression de gavage relativement faible provenant d'une source auxiliaire différente de la pompe fournissant la pression P. Un étranglement réglable 36a peut être prévu sur la canalisation 36. Dans cette première position du tiroir, la canalisation 31 est reliée à une canalisation 37 allant à la bâche. A titre indicatif, non limitatif, la pression de gavage du liquide dans la canalisation 36 n'est pas supérieure à 20 bars, alors que la pression P peut aller jusqu'à environ 200 bars.

Le liquide sous pression de gavage fourni par la canalisation 36 permet d'éviter un phénomène de cavitation dans la chambre du vérin 18 côté tige, mais n'a aucune influence sensible sur les mouvements du piston lorsque l'outil 3 est attelé, car cette pression de gavage est trop faible vis-à-vis des pressions développées par les réactions de l'outil sur le système d'attelage. L'autre canalisation 31 est reliée à la bâche 23 lorsque la bobine 34 est excitée. On voit ainsi que les mouvements de la tige 19 du vérin 18 sont libres, lorsque la bobine 34 est excitée, puisque le liquide contenu dans chacune des chambres peut être refoulé librement en réponse aux mouvements de la tige 19 dus aux réactions de l'outil 3.

Les seconds moyens de distribution 30 sont commandés par les moyens de commande constitués par l'ensemble électronique 28, combiné avec le capteur 27 et le radar 26 de manière telle que lorsqu'une montée des bras longitudinaux 5, 6 a lieu, le distributeur 33 passe sur la deuxième position (position neutre), représentée sur la figure 2, assurant le blocage de la longueur du vérin 18.

Avantageusement, la sortie de l'ensemble électronique 28 servant à la commande de la bobine 24 de l'électrodistributeur 21 (pour assurer la montée des bras 5, 6) est utilisée pour la commande de l'autre bobine 34. Un circuit inverseur 38 est prévu entre la sortie du circuit 28, reliée à la bobine 25, et la bobine 34 ; dans ces conditions, lorsqu'aucune tension de commande n'est fournie à la bobine 24, le circuit inverseur 38 donne sur sa sortie une tension qui est appliquée à la bobine 34 ; le distributeur 33 est donc maintenu dans sa première position (variation libre de longueur du vérin 18) lorsque les bras 5, 6 ne sont pas commandés en montée.

Par contre, lorsqu'une tension apparaît sur la bobine 24, provoquant le déplacement du tiroir 21 dans la position qui assure une montée des bras 5 et 6, la tension sur la bobine 34 disparaît et le tiroir 33 passe dans sa deuxième position, illustrée sur la figure 2 provoquant un blocage de la longueur du vérin 18.

La bobine 35, lorsqu'elle est mise sous tension, permet de faire passer le tiroir 33 dans une troisième position pour laquelle le liquide sous pression de gavage provenant de la canalisation 36 passe dans la canalisation 31 débouchant dans la chambre du vérin 18 opposée à la tige 19, tandis que la canalisation 32 est reliée à la bâche. La mise sous tension de l'enroulement 35 peut être assurée à l'aide d'une commande extérieure faisant intervenir un contact 39.

La mise sous tension de la bobine 35 est commandée, comme expliqué plus loin, en vue de faciliter l'accrochage de l'outil 3, alors que le système d'attelage n'est pas soumis à des efforts de la part de l'outil 3. La pression de gavage provenant de la canalisation 36 est alors suffisante pour provoquer, en étant admise dans la chambre du vérin 18 opposée à la tige 19, une sortie de cette tige 19 et un allongement du vérin.

Bien entendu, les commandes électriques des alimentations des diverses bobines 24, 25 et 34, 35 sont prévues pour empêcher une mise sous tension simultanée de deux bobines opposées.

Ceci étant, le fonctionnement du dispositif de contrôle D est le suivant.

En se reportant à la figure 3, on peut voir, en trait plein épais, les positions relatives du tracteur, de l'outil et du système d'attelage (schématiquement représenté) lorsque le taux de patinage du tracteur 1 est inférieur à une valeur de référence.

Comme expliqué précédemment, le distributeur 33 (figure 2) se trouve dans sa première position, la bobine 34 étant excitée, position pour laquelle les variations de longueur du vérin de troisième point 18 sont libres. L'outil 3 va pouvoir suivre le terrain, dans le sens longitudinal, par rotation autour d'un axe géométrique transversal horizontal passant par les points d'accrochage bas 10 (voir figure 1).

Si le taux de patinage dépasse la valeur de référence, l'ensemble électronique 28 agit sur le distributeur 21 pour commander la rentrée des tiges 15, 16 des vérins 12 et 13, et la montée des bras 5, 6.

En l'absence des seconds moyens de distribution 30 conformes à l'invention, l'outil prendrait la position représentée en trait plein fin sur la figure 3 pour laquelle les points d'accrochage bas 10 se sont relevés tandis que le point d'accrochage supérieur 11 basculerait vers l'avant tout en montant, ce qui provoquerait un allongement du vérin 18. La charge à laquelle est soumise la roue de jauge 4 resterait sensiblement la même ainsi que la charge supportée par le tracteur. Il n'y a donc pas amélioration de la capacité de traction, même s'il y a diminution du patinage en liaison avec la diminution de l'effort de poussée requis.

Selon l'invention, grâce à la combinaison de l'ensemble des moyens de commande avec les seconds moyens de distribution 30, lorsque le distributeur 21 passe dans la position commandant la montée des bras 5, 6, les seconds moyens de distribution 30 passent dans leur deuxième position illustrée sur la figure 2, par coupure de l'excitation de la bobine 34. Le liquide est alors emprisonné dans les chambres du vérin 18 dont la longueur est bloquée à une valeur constante. Dans ces conditions, comme illustré en tirets sur la figure 3, lorsque les bras 5 et 6 sont relevés, le vérin 18 pivote autour de l'axe 17, à longueur constante, et il y a alors soulèvement de la partie avant de l'outil 3 et délestage de la ou des roues de jauge 4 avec transfert automatique de la charge sur le tracteur dont la capacité de traction est améliorée.

L'accroissement de la charge lors de la remontée de l'outil 3 peut induire un affaissement des pneumatiques du tracteur mais n'entraîne pas un accroissement de la profondeur de travail de l'outil. Le dispositif de contrôle agit automatiquement par incrémentation continuelle pour adapter en permanence le transfert de charge aux conditions de traction requises, et la longueur du vérin 18 au suivi de relief de l'outil.

Le dispositif de contrôle présente l'avantage d'être totalement indépendant de l'outil et de ne pas nécessiter de réglage, en évitant la présence de capteurs sur la roue de jauge et de conducteurs électriques de liaison.

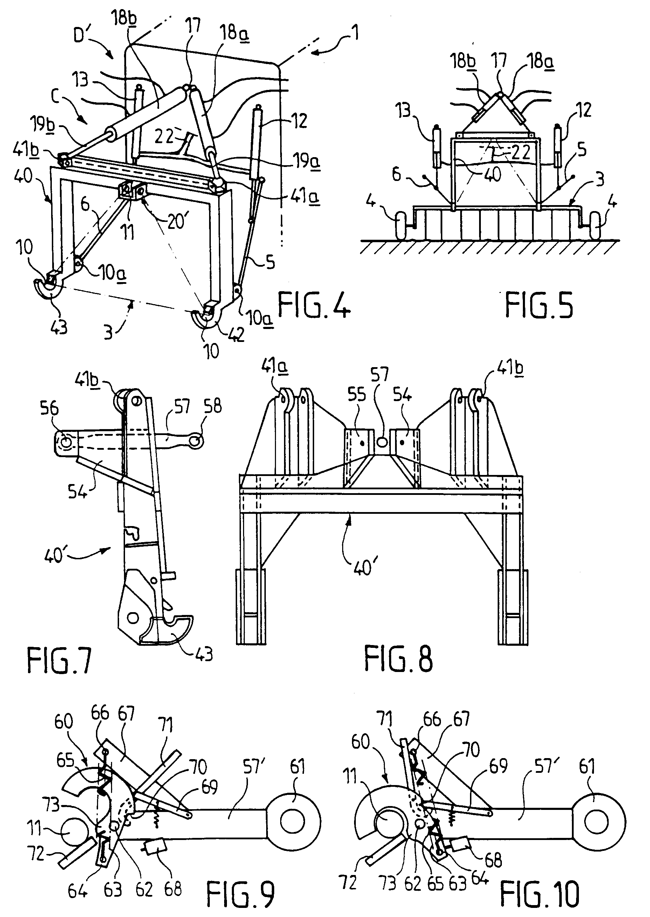

En se reportant à la figure 4, on peut voir un système d'attelage faisant intervenir un cadre intermédiaire 40 en forme de U renversé comme montré par FR-A-2 649 580. Le cadre 40 est disposé entre les points d'accrochage du système d'attelage et les trois points d'accrochage de l'outil.

Le dispositif de contrôle D comporte deux vérins de troisième point 18a, 18b formant entre eux un angle dont le sommet correspond au troisième point d'accrochage 17 sur le tracteur. Les vérins 18a, 18b sont du type à double effet comme le vérin 18. Les extrémités des tiges 19a, 19b correspondent à deux points d'accrochage latéraux 41a, 41b prévus sur la partie supérieure du cadre 40, symétriquement par rapport au troisième point d'accrochage 20', situé au milieu de la partie supérieure du cadre, vers l'avant. Le cadre 40 comporte en outre deux points bas latéraux d'accrochage 42, 43 (réalisés de manière classique à l'aide de mains d'accrochage avec dispositif de blocage) pour les points bas d'accrochage de l'outil. En partie basse à l'arrière, de chaque côté, le cadre 40 comporte des points d'accrochage 10a portés par les extrémités des bras 5, 6.

Comme visible sur le schéma de la figure 6, les seconds moyens de distribution 30' pour l'alimentation des deux vérins 18a, 18b de troisième point, comprennent un électrodistributeur 33' équipé d'une bobine électrique de commande 34' et d'un ressort de rappel 44 en position neutre ou deuxième position pour laquelle les deux canalisations 32a, 32b, venant des chambres côté tige des vérins 18a, 18b sont fermées ce qui correspond au blocage de la longueur des vérins 19a, 19b.

Les deux orifices du distributeur 30' opposés aux orifices de branchement des canalisations 32a, 32b sont reliés entre eux par un pontage 45, et sont reliés par la canalisation 36' à une source de liquide sous pression de gavage, généralement inférieure à 20 bars. Un étranglement réglable 36'a peut être prévu sur la canalisation 36'.

Lorsque la bobine 34' est mise sous tension, le tiroir 33' passe dans sa première position pour laquelle les deux canalisations 32a, 32b sont reliées au pontage 45 et à la canalisation 36'.

Le dispositif de contrôle D' comprend en outre des troisièmes moyens de distribution 46, disposés sur la conduite 31b branchée sur la chambre du vérin 18b opposée à la tige 19b. Une canalisation 47 assure la liaison en parallèle des deux chambres des vérins 18a, 18b opposées aux tiges ; ces deux chambres sont donc alimentées en parallèle par la canalisation 31b. Les troisièmes moyens de distribution 46 comprennent un tiroir 48 pouvant prendre deux positions sous l'action respectivement d'une bobine électrique 49 et d'un ressort 50 agissant à l'opposé de la bobine.

Le distributeur 46 comporte deux orifices du côté opposé à la canalisation 31b, l'un des orifices étant relié par une canalisation 51 au pontage 45 et donc à la canalisation 36'. L'autre orifice est relié par une canalisation 52 à la bâche. Dans une première position ou position neutre, représentée sur la figure 6, correspondant à l'absence d'excitation de la bobine 49, le tiroir 48 établit une liaison entre la canalisation 31b et la canalisation 52, tandis que la canalisation 51 est fermée. Dans ces conditions, lorsque la bobine 34' est excitée, les longueurs des vérins 18a, 18b peuvent varier librement. Les mouvements d'allongement ou de rétraction des vérins 18a, 18b sont possibles en fonction du relief parcouru par la ou les roues de jauge de l'outil. Du fait du pontage 45, les oscillations sont prises en compte avec transfert d'un volume de liquide d'une chambre d'un vérin dans l'autre. Les roues de jauge 14 assurent la stabilité de l'outil.

Comme expliqué précédemment, lorsque le dispositif de contrôle commande une montée des bras 5, 6, il y a commande simultanée des seconds moyens de distribution dont la bobine 34' n'est plus excitée. Le tiroir 33' passe dans la position neutre et ferme les chambres côté tige des deux vérins 18a, 18b dont les longueurs sont bloquées.

La géométrie de l'ensemble est telle que la remontée des bras 5, 6 (et de l'outil) induit une demande d'élongation des vérins 18a, 18b ; ces vérins étant bloqués il y a soulèvement de la partie avant de l'outil et délestage des roues de jauge avec transfert de la charge sur le tracteur et amélioration de la capacité de traction (voir figure 3).

La bobine 49 des troisièmes moyens de distribution 46 peut être commandée de l'extérieur à l'aide d'un contact 53 assurant l'alimentation électrique de cette bobine. Lorsque l'excitation de la bobine 49 est commandée de l'extérieur, par un opérateur, le tiroir 48 passe sur sa deuxième position, pour laquelle la canalisation 51 se trouve reliée à la canalisation 31b et aux chambres des vérins 18a, 18b opposées aux tiges. Dans la mesure où les tiges 19a, 19b ne rencontrent pas une résistance importante, par exemple si l'outil n'est pas accroché, la pression de gavage fournie par la canalisation 52 sera suffisante pour provoquer l'élongation des vérins 19a, 19b dont les chambres côté tiges sont reliées par les canalisations 32a, 32b à la canalisation 36'. Par effet différentiel, en raison de la section utile plus grande des chambres opposées aux tiges 19a, 19b, il y aura bien élongation des vérins 18a, 18b lorsque la bobine 34 est excitée.

En se reportant aux figures 7 et 8, on peut voir une variante de réalisation 40' du cadre intermédiaire qui comporte, en partie haute médiane, deux ailes ou joues 54, 55, en saillie vers l'arrière (au lieu de comporter le point d'accrochage supérieur 20') et délimitant un espace libre entre elles. Les ailes 54, 55 sont munies, vers leur extrémité arrière, d'un trou 56 pour le passage d'un axe d'accrochage d'une barre de troisième point 57 dont la longueur est de préférence réglable. Cette barre 57 peut donc osciller, entre les ailes 54, 55, autour d'un axe sensiblement horizontal passant par les trous 56. L'extrémité avant de la barre 57 est équipée d'un moyen d'accrochage 58 pour le point supérieur d'accrochage 11 de l'outil. La barre 57 peut être maintenue avec une possibilité de rotation autour de l'axe 56 par des liens flexibles tels qu'une chaîne et un ressort accrochés en des points du cadre 40' situés à un niveau supérieur à l'axe 56.

Lorsque le dispositif de contrôle D ou D' est mis sous tension électrique, par exemple lors de l'initialisation des commandes électriques du dispositif, comme déjà expliqué, les seconds moyens de distribution 30 ou 30' prennent la première position pour laquelle les chambres côté tiges des vérins 18, ou 18a, 18b, sont reliées à la pression de gavage arrivant par 36 ou 36'. Cette pression est suffisante pour maintenir les vérins sous tension hydraulique lorsque la charge de l'outil n'est pas appliquée aux extrémités des tiges 19 19a, 19b.

Il peut en résulter une certaine difficulté pour l'accouplement de l'outil 3, notamment au point supérieur 11.

Le cadre intermédiaire 40 ou 40' vise à faciliter cette opération d'accouplement de l'outil, mais, du fait que ce cadre est situé en avant du tracteur, l'opérateur ne peut pas avoir une vue d'ensemble sur ce mécanisme, ce qui maintient une difficulté d'accouplement.

La troisième position du distributeur 30 ou la deuxième position des troisièmes moyens de distribution 46 de la figure 6 permettent de remédier à cet inconvénient.

Pour réaliser l'accouplement de l'outil 3 à l'avant du tracteur, à partir du poste de conduite, il suffit d'opérer de la manière suivante.

On suppose que l'outil 3 repose sur un sol qui n'est pas nécessairement horizontal et que les points bas d'accrochage arrière 10 ne sont pas à la même hauteur ; par exemple, le point d'accrochage bas 10 situé à gauche, vu du poste de conduite du tracteur, est le plus bas.

A la mise en service, les chambres côté tiges des vérins 18a, 18b sont reliées à la canalisation 36' d'arrivée de liquide à la pression de gavage. Comme l'outil 3 n'est pas accroché au système d'attelage, les tiges 19a, 19b rentrent dans les vérins 18a, 18b et un basculement vers l'arrière du cadre 40 se produit autour d'un axe géométrique transversal fictif passant par les points d'attache bas 10a (figure 4).

L'opérateur approche le tracteur des points d'accrochage arrière de l'outil en ayant abaissé suffisamment les bras 5, 6 pour que les crochets 42, 43 du cadre 40 se trouvent à un niveau inférieur au point d'accrochage 10 le plus bas de l'outil.

Lorsque les crochets 42, 43 sont arrivés au-dessous des points d'accrochage 10 de l'outil, l'opérateur commande la montée des bras 5, 6. L'accrochage va se produire tout d'abord entre le crochet 42 et le point d'accrochage gauche inférieur 10 de l'outil, qui est le plus bas.

Du fait que les bras 5, 6 sont indépendants et que les vérins 12, 13 sont alimentés en parallèle à partir du distributeur 21, la pression P n'augmentera de manière suffisante (pour soulever le bras 5 déjà accroché) que lorsque le vérin 13, commandant le bras 6, sera également soumis à une charge après accrochage du crochet 43.

Ainsi, après attelage du crochet 42, ce dernier va rester immobile, tandis que le crochet 43 va continuer à monter jusqu'à ce que le point d'accrochage bas 10, situé sur la droite (vu du tracteur) s'engage dans le crochet 43. A ce moment, les deux points inférieurs 10 sont engagés dans les crochets 42, 43, et le cadre 40 a tourné autour d'un axe longitudinal virtuel pour prendre une inclinaison transversale semblable à celle de l'outil. Cette inclinaison est rendue possible par la liberté de longueur des vérins 18a, 18b de troisième point.

Le basculement vers l'arrière de la partie supérieure du cadre 40 dont il a été question précédemment, permet d'être sûr que les deux points inférieurs 42, 43 restent les plus avancés, ce qui facilite leur raccordement aux points bas 10 de l'outil, sans qu'il y ait interférence au niveau du point supérieur d'accrochage.

Des détecteurs de verrouillage peuvent être installés sur le cadre intermédiaire, par exemple sous forme de voyants lumineux, pour informer l'opérateur que l'accrochage des points inférieurs est terminé.

Lorsque les points inférieurs 42, 43 ont été raccordés à l'outil, le point d' accrochage supérieur 20' va se trouver en face, mais en arrière, du point supérieur d'accrochage 11 de l'outil.

Pour l'accrochage du point supérieur 20', il suffira, à l'opérateur, d'agir sur le contact 53 de commande extérieure pour provoquer l'élongation des vérins 18a, 18b en envoyant la pression de gavage dans les chambres de ces vérins opposées à la tige. Le cadre 40 effectue alors un basculement vers l'avant autour de l'axe transversal fictif passant par les points 10a, jusqu'à l'accrochage du point supérieur 11 de l'outil avec le point 20' du cadre 40.

La commande extérieure 53 du distributeur 46 est conçue de sorte que le mouvement des vérins 18a, 18b soit stoppé dès qu'il y a relâchement du contact 53.

Un deuxième contact interrupteur, fonctionnant dans les mêmes conditions que le contact 53, peut être prévu pour commander le raccourcissement des vérins 18a, 18b afin d'avoir toute liberté de commande au moment de l'accrochage de l'outil.

Bien entendu, lesdites commandes extérieures peuvent être doublées en cabine pour assurer l'accrochage complet sans avoir à quitter le poste de conduite.

Comme déjà indiqué à propos des figures 7 et 8, un cadre en U 40', selon l'invention, est avantageusement muni de deux joues 54, 55 en saillie vers l'arrière pour relier le point médian supérieur du cadre à l'outil, au lieu d'un crochet fixe conventionnel.

Cet agencement particulier de la partie supérieure médiane du cadre 40' est permise par la liaison, avec le tracteur, réalisée au moyen des deux vérins supérieurs 18a, 18b disposés en formant un triangle. La barre supérieure 57 réglable du cadre 40' s'accommode des différentes géométries d' outils, sans affecter la géométrie du relevage.

Cette disposition permet au cadre intermédiaire 40' de devenir universel en autorisant l' accouplement d' outils dont la hauteur de potence est définie selon des standards différents en fonction des pays, par exemple standard ISO, SAE...., ou selon des contraintes spécifiques à l'outil.

Comme expliqué précédemment, le dispositif permet un accouplement automatique total de l'outil en procédant de la façon séquentielle déjà décrite.

Le centrage du cadre intermédiaire, lors du raccordement des points inférieurs de l'outil, garantit un alignement qui autorise de prévoir, en partie supérieure, l'accouplement automatique de fonctions hydrauliques et électriques, qui peuvent être prévues pour les asservissements de l'outil.

Le fait de pouvoir assurer le raccordement de l'outil, sans qu'un soulèvement complet de l'outil soit nécessaire, est un avantage supplémentaire en matière de sécurité, car il élimine le risque de chutes qui peut se produire en phase d'accrochage avec un cadre intermédiaire classique lorsque le raccordement est mal réalisé.

Pour réaliser cet accouplement automatique, avec un cadre 40' tel que montré sur les figures 7 et 8, on équipe avantageusement la barre supérieure de liaison 57 d'un crochet automatique 60 tel qu'illustré sur les figures 9 et 10 afin de terminer automatiquement le raccordement des trois points de l'outil.

En se reportant à la figure 9, on peut voir une barre supérieure de liaison 57' munie du crochet automatique 60. La barre 57' a de préférence une longueur réglable ; elle est munie, à son extrémité éloignée du crochet, d'une rotule 61 propre à se monter entre les joues 54, 55 (figures 7 et 8) à l'aide d'un axe traversant les trous 56.

Le crochet 60 est articulé autour d'un axe 62 prévu à l'extrémité avant de la barre 57', agencée sous forme d'une fourche. Cette fourche présente deux branches séparées par un espace dans lequel est monté rotatif le crochet 60, dont la concavité est tournée vers le bas. Ce crochet 60 comporte, à sa partie arrière tournée vers la rotule 61, une extension inférieure 63, au-dessous de la barre 57'. Un pion 64 est fixé sur cette extension 63 pour l'accrochage d'une extrémité d'un ressort de traction 65 dont l'autre extrémité est accrochée à un pion 66 porté par une sorte de potence 67 solidaire de la barre 57' et faisant saillie vers le haut au-dessus du crochet 60. Les pions 64 et 66 sont disposés de manière que dans la position ouverte du crochet, illustrée sur la figure 9, l'axe géométrique du ressort 65 soit situé en avant de l'axe de rotation 62 du crochet 60. La force de rappel exercée par le ressort 65 a donc tendance à maintenir le crochet 60 en position ouverte.

Dans la position de fermeture des crochets, illustrée sur la figure 10, l'axe géométrique du ressort 65 est passé en arrière de l'axe de rotation 62 de sorte que l'action du ressort 65 a tendance à fermer le crochet 60. Lors du basculement de la position ouverte à la position fermée ou inversement, l'axe géométrique du ressort 65 passe donc d'un côté à l'autre de l'axe 62.

Un détecteur de position 68, par exemple à contact électrique, peut être fixé sur le bras 57' de manière à être actionné par l'extrémité inférieure de l'extension 63 lorsque le crochet 60 est dans la position de verrouillage illustrée sur la figure 10. L'information de verrouillage peut être transmise par un conducteur électrique au tableau de bord du tracteur.

Un verrou de sûreté 69, constitué par exemple par un doigt articulé sur la barre 57', en un point situé en arrière du crochet 60, peut être prévu. Ce verrou 69 situé en partie supérieure de la barre 57' est propre à venir s'arc-bouter contre une zone de butée 70 du crochet 60 en position fermée, sous l'action d'un ressort de rappel.

Une poignée de déverrouillage 71, articulée sur le crochet, est prévue pour permettre à un opérateur de soulever le verrou 69 et de déverrouiller le crochet 60.

A son extrémité inférieure avant, la barre 57' est munie d'une pièce 72 de guidage, inclinée vers le bas.

En position ouverte, le crochet 60 fait saillie par un bossage 73, en forme de came, sur la surface du guide 72. Ce bossage 73 a une forme appropriée pour provoquer, lorsque le bossage 73 vient en contact avec le point d'accrochage supérieur 11 de l'outil, généralement constitué par un axe cylindrique, le basculement du crochet 60 vers sa position de fermeture.

Le fonctionnement du crochet automatique résulte immédiatement des explications précédentes.

Comme déjà expliqué, la barre 57' conserve une certaine possibilité de débattement autour de l'axe de montage de la rotule 61. Lorsque l' opérateur, après avoir assuré l' accrochage des points bas du cadre 40' commande le basculement vers l'avant de ce cadre 40', par élongation des vérins 18a, 18b, le crochet 60, en position ouverte, s'approche du point d'accrochage supérieur 11 de l'outil.

Ce point d'accrochage 11, guidé par la pièce 72, va venir au contact du bossage 73 et provoquer la fermeture du crochet 60 en fin de basculement vers l'avant du cadre 40'.

## Revendications

1. Dispositif de contrôle d'un outil agricole (3) muni d'au moins une roue de jauge (4), et destiné à être poussé par un tracteur (1), le dispositif comprenant un système d attelage et de relevage destiné à être monté à l'avant du tracteur pour la fixation de l'outil, ce système comportant :
- deux bras longitudinaux inférieurs (5, 6) dont les parties arrière comportent des moyens d'articulation (7) agences pour être relies au bâti du tracteur, et dont les extrémités avant sont munies d'un moyen d'accrochage (9) de l'outil pour constituer deux points d' accrochage bas,
- un organe d'accrochage supérieur (C) pour relier un troisième point d'accrochage (17) du tracteur à l'outil (3), ce dernier étant équipé, à sa partie arrière, de trois moyens d'accrochage (10, 11) conjugués de ceux du système d'attelage,
- au moins un vérin de relevage (12, 13) et des moyens de distribution (21) pour contrôler la montée ou la descente des bras longitudinaux (5, 6) ; des moyens de mesure (M) du patinage du tracteur prévus pour être montes sur le tracteur ;
- et des moyens de commande (28) de ces moyens de distribution (21), en réponse à l'information sur le patinage du tracteur provenant de ces moyens de mesure (M) du patinage
l'ensemble étant agencé pour commander une montée des bras inférieurs (5, 6) et une diminution de la profondeur de travail de l'outil (3) lorsque le taux de patinage du tracteur devient supérieur à une valeur de référence déterminée,
caractérisé par le fait que, d'une manière connue en elle-même, l'organe d accrochage supérieur (C) comprend au moins un vérin (18 ; 18a, 18b) de troisième point, relié à de seconds moyens de distribution de fluide (30 ; 30') propres à prendre une première position dans laquelle les variations de longueur de l'ensemble de la tige et du cylindre du vérin de troisième point (18 ; 18a, 18b) sont libres, et une deuxième position pour laquelle le vérin de troisième point (18 ; 18a, 18b) est bloqué et à contribue à un transfert de charge de la roue de jauge (4) au tracteur (1),
et que ces seconds moyens de distribution (30 ; 30') sont commandés par les susdits moyens de commande (28) de manière telle que lorsqu'une montée des bras longitudinaux (5, 6) a lieu, les seconds moyens de distribution (30, 30') passent sur leur deuxième position pour assurer un report d'une partie de la charge de la ou des roues de jauge (4) de l'outil vers le tracteur simultanément à une remontée des bras longitudinaux inférieurs.

2. Dispositif de contrôle selon la revendication 1 avec configuration géométrique du système d'attelage telle que, lorsqu'une montée des bras inférieurs est commandée, le (ou les) vérin(s) de troisième point est (sont) sollicité(s) à l'allongement, caractérisé par le fait que les seconds moyens de distribution (30, 30'), dans leur deuxième position, assurent un blocage du liquide dans la chambre du vérin (18 ; 18a, 18b) comprimée à l'allongement et donc un blocage de la longueur d'ensemble du vérin de troisième point, de sorte que la montée des bras inférieurs (5, 6) s'accompagne alors d'un soulèvement de la partie avant de l'outil et d'un délestage de la ou des roues de jauge (4) avec transfert automatique de charge sur le tracteur (1).

3. Dispositif de contrôle selon la revendication 1 ou 2, caractérisé par le fait que le vérin de troisième point (18 ; 18a, 18b) est du type à double effet et chacune des chambres situées de part et d'autre du piston est reliée aux seconds moyens (30, 30') de distribution de fluide.

4. Dispositif de contrôle selon l'une des revendications précédentes, caractérisé par le fait que les seconds moyens de distribution (30, 30') sont commandés électriquement et le montage est prévu pour que lorsque l'alimentation électrique du dispositif de contrôle est assurée, les moyens de distribution (30, 30') passent dans leur première position correspondant à un mode flottant, tandis qu'en cas de coupure de l'alimentation électrique, les seconds moyens de distribution passent sur la deuxième position assurant le blocage de la longueur du vérin de troisième point (18 ; 18a, 18b).

5. Dispositif de contrôle selon l'une des revendications précédentes, caractérisé par le fait que les seconds moyens de distribution (30, 30'), dans leur première position, sont propres à assurer un gavage en liquide sous une pression relativement faible, en particulier inférieure à 20 bars, de la chambre côté tige du vérin.

6. Dispositif selon l'une des revendications précédentes, comportant un seul vérin de troisième point (18), caractérisé par le fait que les seconds moyens de distribution (30, 33), commandant ce vérin (18), comportent une troisième position qui permet d'inverser la distribution du fluide par rapport à la première position et de commander une élongation du vérin, le passage des seconds moyens de distribution dans cette troisième position étant commandé à l'aide d'un bouton de contact extérieur (39).

7. Dispositif selon l'une des revendications 1 à 5, dans lequel un cadre intermédiaire (40, 40') en forme de U renversé est prévu entre les points d'accrochage des bras (5, 6) du système d' attelage et l'outil (3), caractérisé par le fait qu'il comporte deux vérins (18a, 18b) de troisième point formant entre eux un angle dont le sommet correspond au troisième point d'accrochage (17) sur le bâti du tracteur, et dont les extrémités correspondent à deux points d'accrochage latéraux (41a, 41b) prévus sur la partie supérieure du cadre, symétriquement par rapport au troisième point d'accrochage (20') de l'outil, situé au milieu da la partie supérieure du cadre.

8. Dispositif selon la revendication 7, caractérisé par le fait que les seconds moyens de distribution (30') sont agencés pour assurer, dans leur première position, un pontage (45) mettant en communication les deux chambres côté tige des deux vérins (18a, 18b) de troisième point, alors que les deux autres chambres des vérins sont reliées à la bâche.

9. Dispositif selon la revendication 8, caractérisé par le fait qu'il comprend des troisièmes moyens de distribution (46) à deux positions, disposés sur une conduite (31b) reliée en parallèle aux deux chambres opposées à la tige, ces troisièmes moyens de distribution (46) de vérins de troisième point (18a, 18b) assurant, dans une première position (fonctionnement normal) la liaison des chambres opposées à la tige avec le réservoir de liquide à faible pression, tandis que dans une deuxième position, commandée extérieurement, ces troisièmes moyens de distribution (46) assurent une arrivée, dans les chambres opposées à la tige (19a, 19b), d'un liquide sous la même pression que celui admis dans les chambres côté tige, de sorte que par effet différentiel dû à la section de la tige, il y ait allongement des vérins de troisième point (18a, 18b), notamment en vue de faciliter l'accrochage du troisième point haut (11) de l'outil, après accrochage des deux points inférieurs (10).

10. Dispositif de contrôle selon l'une des revendications 7 à 9, caractérisé par le fait que le cadre intermédiaire (40') comporte, en partie haute médiane, deux ailes (54, 55) en saillie vers l'arrière munies, à leur extrémité arrière, d'un trou (56) ou analogue pour l'accrochage entre elles d'une barre de troisième point (57, 57'), en particulier de longueur réglable.

11. Dispositif de contrôle selon la revendication 10, caractérisé par le fait que la barre de troisième point (57') supérieur du cadre intermédiaire (40') est munie d'un crochet automatique (60) pour assurer un raccordement automatique depuis le poste de cabine du tracteur, et que des moyens indicateurs (68) du verrouillage sont prévus avec ce crochet automatique (60).

12. Dispositif selon l'une des revendications précédentes, caractérisé par le fait que les deux bras longitudinaux inférieurs (5, 6) du système d'attelage sont à mouvement relatif l'un par rapport à l'autre et peuvent prendre des inclinaisons différentes l'un par rapport à l'autre.

## Claims

1. Device for controlling an agricultural implement (3) equipped with at least one gage wheel (4) and intended to be pushed by a tractor (1), said device comprising a hitch and lift system intended to be mounted at the front of the tractor in order to fasten the implement, this system including :
- two lower longitudinal arms (5, 6), the rear parts of which include means (7) of articulation arranged for being connected to the structural part of the tractor, and the front ends of which are equipped with a means (9) of attaching the implement in order to constitute two bottom attachment points,
- an upper attachment member (C) for linking a third attachment point (17) of the tractor to the implement (3), the latter being equipped, at its rear part, with three attachment means (10, 11) which are the conjugate of those of the hitch system,
- at least one lifting ram (12, 13) and distribution means (21) for controlling the raising or lowering of the longitudinal arms (5, 6) ;
- means (M) for measuring the slippage of the tractor being provided for being mounted on the tractor ;
- and a controller (28) which commands these distribution means (21) in response to information regarding the slippage of the tractor originating from these slippage-measuring means (M),
the assembly being arranged so as to command a raising of the lower arms (5, 6) and a reduction in the working depth of the implement (3) when the amount of slippage of the tractor becomes greater than a given reference value ;
characterized in that, in a way known per se, the upper attachment member (C) comprises at least one third point ram (18 ; 18a, 18b), connected to second fluid-distribution means (30 ; 30') capable of adopting a first position in which the variations in length of the assembly of the rod and of the cylinder of the third point ram (18; 18a, 18b) are free, and a second position for which the third point ram (18; 18a, 18b) is blocked and plays a part in transferring load from the gage wheel (4) to the tractor (1),
and in that these second distribution means (30 ; 30') are operated by the abovementioned controller (28) in such a way that when raising of the longitudinal arms (5, 6) takes place, the second distribution means (30, 30') switch into their second position in order to transfer some of the load on the gage wheel or wheels (4) of the implement toward the tractor at the same time as the lower longitudinal arms are raised.

2. Control device according to claim 1 with a geometric configuration of the hitch system which is such that when raising of the lower arms is commanded, the third point ram (or rams) is (are) urged to lengthen, characterized in that the second distribution means (30, 30'), in their second position, block the liquid in that chamber of the ram (18 ; 18a, 18b) which is compressed upon lengthening and therefore block the overall length of the third point ram in such a way that the raising of the lower arms (5, 6) is then accompanied by a lifting-up of the front part of the implement and a lightening of the gage wheel or wheels (4) with automatic load transfer to the tractor (1).

3. Control device according to claim 1 or 2, characterized in that the third point ram (18 ; 18a, 18b) is of the double-acting type and each of the chambers situated on either side of the piston is connected to the second fluid-distribution means (30, 30').

4. Control device according to one of the preceding claims, characterized in that the second distribution means (30, 30') are operated electrically and the layout is designed so that when the control device is electrically powered, the distribution means (30, 30') switch into their first position corresponding to a floating mode, whereas in the event of the electrical supply being cut off, the second distribution means switch into the second position, blocking the length of the third point ram (18 ; 18a, 18b).

5. Control device according to one of the preceding claims, characterized in that the second distribution means (30, 30'), in their first position, are capable of forcing liquid under a relatively low pressure, particularly one lower than 20 bars, into the rod-side chamber of the ram.

6. Device according to one of the preceding claims, including just one third point ram (18), characterized in that the second distribution means (30, 33) operating this ram (18) include a third position which allows the distribution of the fluid to be reversed by comparison with the first position and a lengthening of the ram to be commanded, the switching of the second distribution means into this third position being commanded whith the aid of an external contact button (39).

7. Device according to one of claims 1 to 5, in which an intermediate frame (40, 40') in the shape of an inverted U is provided between the points of attachment of the arms (5, 6) of the hitch system and the implement (3), characterized in that it includes two third point rams (18a, 18b) forming between them an angle the vertex of which corresponds to the third point (17) of attachment on the structural part of the tractor, and the ends of which correspond to two lateral attachment points (41a, 41b) provided on the upper part of the frame, symmetrically with respect to the third point (20') of attachment of the implement, situated in the middle of the upper part of the frame.

8. Device according to claim 7, characterized in that the second distribution means (30') are arranged so that in their first position they form a bridge (45) placing the two ram-side chambers of the two third point rams (18a, 18b) in communication, while the two other chambers of the rams are connected to tank.

9. Device according to claim 8, characterized in that it comprises third two-position distribution means (46) arranged on a pipe (31b) connected in parallel to the two chambers opposite the rod, these third distribution means (46) of the third point rams (18a, 18b) in a first position (normal operation) link the chambers opposite the rod to the low-pressure liquid reservoir, while in a second position, commanded from the outside, these third distribution means (46) ensure that a liquid under the same pressure as the liquid let into the rodside chambers is let into the chambers opposite the rod (19a 19b) so that through a differential effect which is due to the cross-sectional area of the rod, there is a lengthening of the third point rams (18a, 18b) , especially with a view to making it easier to attach the third top point (11) of the implement, after the two lower points (10) have been attached.

10. Control device according to one of claims 7 to 9, characterized in that the intermediate frame (40') includes, at the top in the middle, two reawardly projecting flanges (54, 55) equipped, at their rear end, with a hole (56) or the like for attaching a third point bar (57, 57'), particularly an adjustable-length bar, between them.

11. Control device according to claim 10, characterized in that the top third point bar (57') of the intermediate frame (40') is equipped with an automatic hook (60) for ensuring automatic coupling from the driver's cab of the tractor, and in that means (68) indicating locking are provided with this automatic hook (60).

12. Device according to one of the preceding claims, characterized in that the two lower longitudinal arms (5, 6) of the hitch system are capable of relative motion one with respect to the other and can adopt different inclinations one with respect to the other.

## Patentansprüche

1. Vorrichtung zum Steuern einer landwirtschaftlichen Arbeitseinrichtung (3) mit wenigstens einem Abstandsrad (4) und zum Schieben durch eine Zugmaschine (1). wobei die Vorrichtung ein Kopplungs- und Hubsystem aufweist, das an der Vorderseite der Zugmaschine zum Befestigen der Arbeitseinrichtung an diesem montiert ist; wobei das System aufweist:
zwei untere in Langsrichtung verlaufende Arme (5, 6), deren hintere Bereiche mit dem Rahmen der Zugmaschine verbindbare Gelenkeinrichtungen (7) aufweisen und deren vordere Enden mit einer Einrichtung (9) zum Ankoppeln der Arbeitseinrichtung versehen sind, die zwei untere Einhängepunkte bilden,
ein oberes Kopplungselement (C) zum Verbinden eines dritten Anlenkpunkts (17) der Zugmaschine mit der Arbeitseinrichtung (3), die ihrerseits in ihrem hinteren Bereich mit drei, denjenigen des Kopplungssystems entsprechenden Kopplungseinrichtungen (10, 11) versehen ist,
wenigstens einen Hubzylinder (12, 13) und eine Verteilereinrichtung (Fluidventil) (21) zum Regeln des Anhebens oder des Senkens der längsgerichteten Arme (5,6);
eine Einrichtung (M) zum Messen des Schlupfs an den Rädern der Zugmaschine zur Montage an der Zugmaschine;
eine Einrichtung (28) zum Steuern des Fluidventils (21) in Abhängigkeit von der von der an der Zugmaschine befindlichen Einrichtung (M) zum Messen des Schlupfs gelieferten Informationssignalen über den Schlupf der Zugmaschine,
wobei die Einrichtung zum Steuern des Anhebens der unteren Arme (5, 6) und einer Verringerung der Arbeitstiefe der Arbeitseinrichtung (3) betätigt wird, wenn der Betrag des Schlupfs der Zugmaschine einen vorbestimmten Referenzwert übersteigt,
dadurch gekennzeichnet, daß das obere Kopplungselement (C) in an sich bekannter Weise wenigstens einen Stellantrieb für den dritten Anlenkpunkt (18; 18a, 18b), der mit einem zweiten Fluidventil (30; 30') verbunden ist, welches in der Lage ist, eine erste Position, in der die Längenveränderung der Kolben-Zylindereinheit des Stellantriebs für den dritten Anlenkpunkt (18; 18a, 18b) freigegeben ist, und eine zweite Position einzunehmen, in der der Stellantrieb für den dritten Anlenkpunkt (18; 18a, 18b) blockiert ist und zur Übertragung der Belastung vom Abstandsrad (4) auf die Zugmaschine (1) beiträgt,
und daß das zweite Fluidventil (30; 30') durch die Steuereinrichtung (28) derart gesteuert ist, daß bei einem Anheben der längsgerichteten Arme (5, 6), das zweite Fluidventil (30; 30') in die zweite Position übergeht, um eine Übertragung eines Teils der Belastung von dem Abstandsrad (4) oder den Abstandsrädern der Arbeitseinrichtung (3) auf die Zugmaschine gleichzeitig mit dem Wiederanheben der unteren längsgerichteten Arme zu gewährleisten.

2. Steuervorrichtung nach Anspruch 1, bei der das Kopplungssystem derart geometrisch konfiguriert ist, daß beim Bewirken eines Anhebens der unteren Arme der (oder die) Stellantrieb(e) für den dritten Anlenkpunkt ausgefahren wird (werden), dadurch gekennzeichnet, daß das zweite Fluidventil (30, 30') in seiner zweiten Position ein Sperren des Fluids in der durch das Ausfahren komprimierten Kammer des Zylinders (18; 18a, 18b) und damit ein Blockieren der Länge der Gesamtheit des Stellantriebs für den dritten Anlenkpurkt bewirkt, derart, daß das Anheben der unteren Arme (5,6) mit einem Anheben des vorderen Teils der Arbeitseinrichtung und somit eine Entlastung des Abstandsrades (4) oder der Abstandsräder mit automatischer Übertragung der Belastung auf die Zugmaschine (1) bewirkt.

3. Steuervorrichtung nach Anspruch 1 oder 2, dadurch gekennzeichnet, daß der Stellantrieb für den dritten Anlenkpunkt (18; 18a, 18b) vom doppeltwirkenden Typ ist und jede der auf der einen und der anderen Seite des Kolbens befindliche Kammer mit dem zweiten Fluidventil (30,30') verbunden ist.

4. Steuervorrichtung nach einem der vorhergehenden Ansprüche, dadurch gekennzeichnet, daß das zweite Fluidventil (30,30') elektrisch gesteuert ist und die Anordnung derart ausgebildet ist, daß, wenn die Stromversorgung der Steuervorrichtung gegeben ist, das Fluidventil (30, 30') seine erste, einem schwebenden Betrieb entsprechende Position einnimmt, während bei einer Unterbrechung der Stromversorgung das zweite Fluidventil seine zweite Position einnimmt, in der die Länge des Stellantriebs für den dritten Anlenkpunkt (18; 18a, 18b) blockiert ist.

5. Steuervorrichtung nach einem der vorhergehenden Ansprüche, dadurch gekennzeichnet, daß das zweite Fluidventil (30, 30') geeignet ist, in der ersten Position ein Auffüllen der auf der Seite der Kolbenstange befindlichen Kammer mit unter geringem Druck, insbesondere unter 20 bar, stehendem Fluid zu bewirken.

6. Vorrichtung nach einem der vorhergehenden Ansprüche mit einem einzelnen Stellantrieb (18), dadurch gekennzeichnet, daß das zweite Fluidventil (30, 33), das diesen Stellantrieb (18) steuert, eine dritte Position aufweist, die das Umkehren der Fluidverteilung in bezug zur ersten Position und das Ausfahren des Zylinders ermöglicht, wobei der Übergang des zweiten Fluidventils in diese dritte Position durch einen externen Kontaktknopf (39) bewirkt wird.

7. Vorrichtung nach einem der Ansprüche 1 bis 5, bei der ein Zwischenrahmen (40,40') in Form eines umgekehrten U zwischen den für die Arme (5,6) vorgesehenen Anlenkpunkten des Kopplungssystems und der Arbeitseinrichtung (3) vorgesehen ist, dadurch gekennzeichnet, daß sie zwei Stellantriebe am dritten Anlenkpunkt (18a, 18b) aufweist, die untereinander einen Winkel bilden, dessen Scheitelpunkt dem dritten Anlenkpunkt (17) am Fahrgestell der Zugmaschine entspricht, und deren Enden zwei seitlichen Anlenkpunkten (41a, 41b) entsprechen, die am oberen Teil des Rahmens in bezug auf den dritten, in der Mitte des oberen Rahmenteils befindlichen Anlenkpunkt (20') der Arbeitseinrichtung symmetrisch angeordnet sind.

8. Vorrichtung nach Anspruch 7, dadurch gekennzeichnet, daß das zweite Fluidventil (30') derart angeordnet ist, daß es in seiner ersten Position eine Überbrückung (45) bildet, die die beiden kolbenstangenseitigen Kammern der beiden Stellantriebe am dritten Anlenkpunkt (18a, 18b) miteinander verbindet, so daß die beiden anderen Kammern der Stellantriebe mit dem Sammelbehälter verbunden sind.

9. Vorrichtung nach Anspruch 8, dadurch gekennzeichnet, daß sie ein drittes Zwei-Wege-Fluidventil (46) aufweist, die in einer parallel mit den der Kolbenstange abgewandten Kammern verbundenen Leitung (31b) angeordnet ist, wobei das dritte Fluidventil (46) der Stellantriebe am dritten Anlenkpunkt (18a, 18b) in einer ersten Position (Normalbetrieb) die Verbindung der der Kolbenstange abgewandten Kammern mit dem Sammelbehälter für unter geringem Druck stehendes Fluid bewirkt, während das dritte Fluidventil (46) in einer zweiten Position, die von außen gesteuert ist, die Zufuhr von Fluid in die den Kolbenstangen (19a, 19b) abgewandten Kammern ermöglicht, wobei das Fluid den gleichen Druck aufweist, wie das in die kolbenstangenseitigen Kammern eingelassene Fluid, derart, daß durch die unterschiedliche Wirkung aufgrund des Querschnitts der Kolbenstangen ein Ausfahren der Stellantriebe am dritten Anlenkpunkt (18a, 18b) erfolgt, um insbesondere das Anlenken des dritten, oberen Punkts (11) der Arbeitseinrichtung nach dem Einhängen der beiden unteren Punkte (10) zu erleichtern.

10. Steuervorrichtung nach einem der Ansprüche 7 bis 9, dadurch gekennzeichnet, daß der Zwischenrahmen (40') im oberen Mittelbereich zwei nach hinten ragende Laschen (54, 55) aufweist, die an ihren hinteren Enden mit einem Loch (56) oder dergleichen versehen sind, um zwischen diesen eine Stange (57, 57') für einen dritten Anlenkpunkt zu befestigen, die insbesondere längenverstellbar ist.

11. Steuervorrichtung nach Anspruch 10, dadurch gekennzeichnet, daß die Stange (57') für den oberen Anlenkpunkt des Zwischenrahmens (40') mit einem automatischen Haken (60) zum automatischen Verbinden von der Kabine der Zugmaschine aus versehen ist, und daß der automatische Haken (60) mit einer die Verriegelung anzeigenden Anzeigeeinrichtung (68) versehen ist.

12. Vorrichtung nach einem der vorhergehenden Ansprüche, dadurch gekennzeichnet. daß die beiden unteren längsgerichteten Arme (5, 6) des Kopplungssystems relativ zueinander bewegbar sind und relativ zueinander verschiedene Neigungen einnehmen können.
